# EUROPEAN PATENT SPECIFICATION

(11) **EP 1 109 978 B1**
(45) Date of publication and mention of the grant of the patent: **07.04.2004**
(21) Application number: 98941175.6
(22) Date of filing: 04.09.1998
(51) Int. Cl.: E04D 1/28, E04D 3/35, B32B 15/08

(54) **INSULATING ROOFING ELEMENT**
ISOLIERENDES DACHEINDECKUNGSELEMENT
ELEMENT DE COUVERTURE ISOLANT

(43) Date of publication of application: 27.06.2001
(73) Proprietor: Smeets, Dominique, 3680 Neeroeteren-Maaseik (BE)
(72) Inventor: Smeets, Dominique, 3680 Neeroeteren-Maaseik (BE)
(74) Representative: Luys, Marie-José A.H.
(86) International application number: PCT/BE1998/000129
(87) International publication number: WO 2000/015924

(56) References cited:
- EP-A- 0 078 174
- EP-A- 0 115 103
- DE-U- 29 803 111

## Description

This invention relates to an isolating roofing element of metal.

The use of metal sheet, which has been pressed into the shape of one or a plurality of contiguous roof tiles, as a roofing is known in the art. Such a roofing is mainly used for the manufacturing of overlay roofs, i.e. roofs which are laid over an already existing roof, for example in case the existing roof shows leakage. The metal sheet is mostly covered with a coloured coat, having a rough surface, in order to imitate the appearance of a clay or slate roof tile as well as possible. When constructing an overlay roof, a wooden framework is applied over the existing roof, onto which the roofing elements are attached by nails.

The known roofing element however has the disadvantage that attaching it by means of nails involves a sound annoyance.

EP-A-115,103 solves the problem of providing a metal-resin-metal laminate which can withstand severe working such as bending and drawing and is suitable for working, for example manufacture of automobile bodies. According to EP-A-115,103 modified polypropylene is not suitable for use as the resin layer, as it offers the problem of cracking of the metal layers during bending. To solve these problems at least the surface on each side of the resin layer is comprised of a ductile resin which exhibits no yielding behavior. The resin materials suitable for use in the laminate of EP-A-115.103 include copolymers of two or more monomers selected from ethylene, propylene, butene-1, butadiene, styrene, vinyl acetate, acrylic acid and the like. To provide the metal sheets with satisfactory corrosion resistance, it is usually subjected to surface treatment, for example N-Zn alloy plating or Fe-Zn alloy plating.

From EP-A-078.174 a metal/thermoplastic resin/metal sandwich laminate is known which is superior in metal-resin bonding strength. secondary processability, heat resistance and economy. To achieve this, use is made of a thermoplastic resin which is a multi layered composite sheet comprising a thermoplastic core resin both surfaces of which are coated with another thermoplastic resin capable of adhering to the metal. The multi layered composite sheet can be formed by well known methods such as coextrusion, extrusion coating, lamination by means of a press. Thermoplastic resins suitable for use as the inner layer include a.o. polyethylene. For bonding the inner resin layer to the metal sheets use is made of an outer layer of a thermoplastic adhesive resin, which is a mixture of polyolefins or a composition comprising a polyolefin as a major component. The thickness of the metal sheets is generally in the range of 0.1-1 mm.

From DE-U-29803111 a roof tile is known which is made of a metal/polyvinylchloride polymer/metal laminate to reduce the emission of contact noise.

It is the aim of this invention to provide a roofing element with which the sound annoyance can be decreased.

It has now been found that this sound annoyance may be significantly decreased, when using a multilayer roofing element, with an upper layer and a lower layer made from metal sheet, which are attached to each other, and have an intermediate layer of a polymer film. The film not only provides sound isolating properties to the roofing, but also heat isolating properties, and results in a decreased condensation at the inside of the roof.

The multilayer roofing element moreover has an improved rigidity as compared to a metal element consisting of only one layer, and it is less easily bent, so that a sturdier roof construction can be obtained.

The polymer film used in the roofing element of this invention may be made of various materials. Examples of suitable materials comprise among others polyethylene, low density polyethylene (LDPE), medium density polyethylene (MDPE), high density polyethylene (HDPE), polyvinyl chloride, polyvinyl alcohol, polyamide and polyvinylidene chloride. Preferably an LDPE film is used.

In order to obtain optimal isolating properties, the upper layer and lower layer are preferably attached to each other by means of the polymer film. The adhesion of the metal sheet to the polymer film may be further improved by providing the upper layer and/or lower layer with an adhesive. It is also possible to provide the film at one or both sides with an adhesive.

The film has preferably a thickness in the range of 10 µm to 1 cm, preferably 100-500 µm, more preferably 100-200 µm. At thicknesses below 100 µm, the film shows a tendency to tear, when the multilayer element with an upper and a lower layer in metal sheet and an intermediate layer of a polymer film, is moulded into the shape of a roof tile, and there is a risk that no optimal adhesion of the upper layer to the lower layer is obtained. When using a film with a thickness of 100-200 µm, an optimal adhesion of the metal sheets to each other can be obtained.

The metal sheet may also be made of various materials. The metal sheet may for example be made of steel, aluminium, zinc or copper. Preferably steel sheet is used, which is preferably provided with a protecting zinc or aluminium coat. The metal sheet preferably has a thickness in the range of 50 µm - 2 cm, more preferably 100-500 µm, in order to obtain a roofing element having sufficient strength and rigidity, the weight of which is not becoming excessively large. Metal sheet of such a thickness may be easily moulded into the desired shape, without thereto having to heat the sheet or to use excessively high pressures.

The roofing element of this invention may be provided with a coloured finishing coat if so desired, in order to approach the appearance of a tiled roof as well as possible. The roofing element of this invention may also be provided with means to attach two or more elements to each other, in order to obtain a strengthened roof construction.

The invention also relates to a process for manufacturing the above described roofing element, in which the polymer film is applied between two metal sheets and the whole is heated in a furnace, whereupon the metal sheets with the intermediate film are pressed onto each other into a multilayer sheet. Thereto, the whole of the metal sheets with the intermediate film is heated during a pre-determined time, to a temperature at which the film softens, but which is below the melting point of the film. This may for example be carried out by moving the whole at a pre-determined speed, through a furnace. Because the film is brought into contact with the metal sheet almost immediately after the heating, and pressed onto the metal sheet, a good adhesion of the film to the metal can be obtained, without the need of previously applying an adhesive to the film or the metal sheet. According to the invention, it is also possible to pre-heat the film, to insert the hot film between the metal sheets and to press the whole.

Subsequently, the multilayer sheet is preferably cut to size, and moulded into the desired shape. The metal sheet cut to size can be pressed into the desired shape immediately, or can first be stored, to press it into the desired shape later on.

The invention is further elucidated by means of the attached figures.
Figure 1 shows a top view of the multilayer roofing element of this invention;
Figure 2 shows a cross section of the multilayer roofing element of this invention, along the line II-II;
Figure 3 shows a cross section of the multilayer roofing element of this invention, along the line III-III.

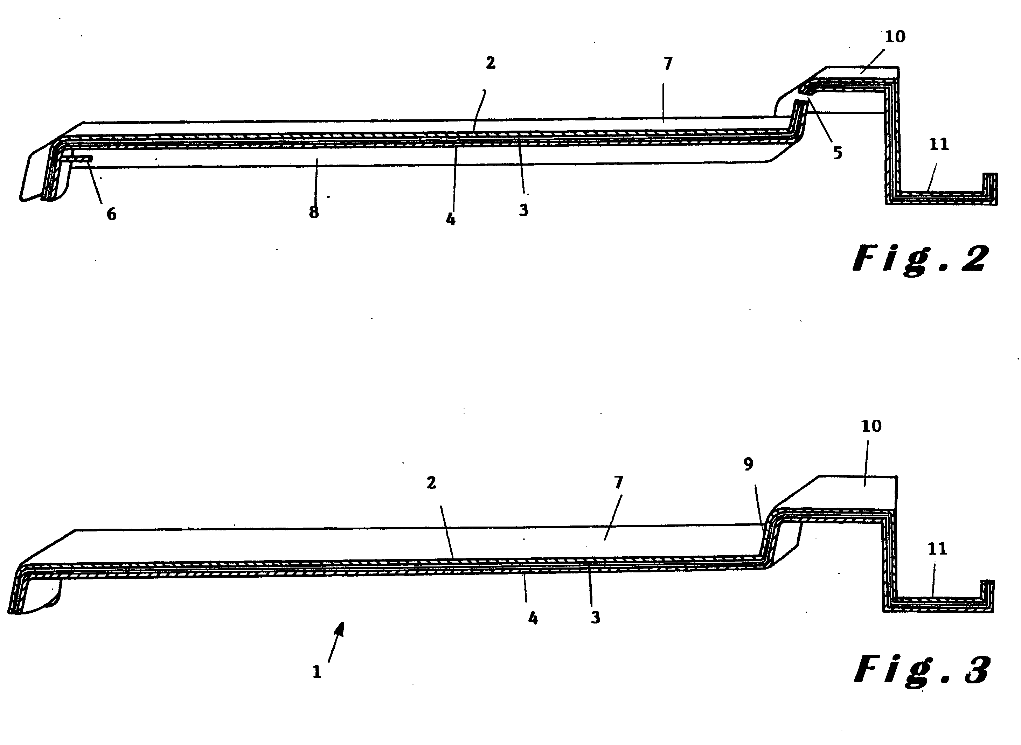

The multilayer roofing element 1 shown in figures 2 and 3 comprises an upper layer 2 and a lower layer 4 which are made of metal. The upper layer 2 and lower layer 4 can be made of the same material or of different materials, but they are preferably made of the same material. The upper layer 2 and lower layer 4 are preferably made of metal, for example steel, which is preferably provided with a protective coat in order to inhibit corrosion. Between the upper layer 2 and lower layer 4 an intermediate layer 3 of a polymer film is present.

The upper layer 2 is attached to the lower layer 4. This may for example be effected by means of an adhesive, or a mechanical anchoring of the upper layer 2 to the lower layer 4. The upper layer 2 is preferably attached to the lower layer 4 by means of the intermediate layer 3 of the polymer film. If so desired, the polymer film and/or the upper layer 2 and/or the lower layer 4 may be provided with an adhesive to obtain an improved adhesion. The adhesive may be an adhesive that shows a good adhesion at room temperature, or which needs heating to a higher temperature.

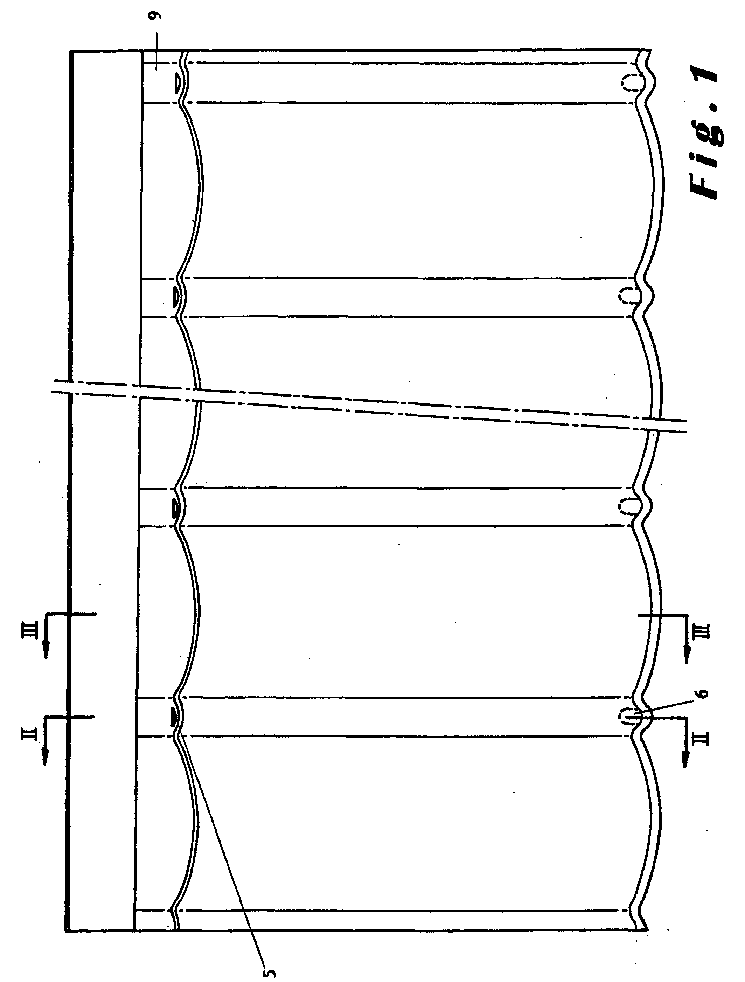

The multilayer roofing element 1 shown in figures 1 and 2 is also provided with means 5, 6 to engage a further element upon the at least partially overlappingly laying of the elements, and means 9, 10, 11 for attaching the element 1 to the wooden framework.

Thereto, the roofing element 1 comprises one or more regularly spaced first jaws 5 and one or more regularly spaced insert members 6. The jaw 5 and the insert member 6 are aligned. The first jaw 5 is located on a first side 7 of the roofing element 1 and forms a protrusion. The insert member 6 is located on the second side 8. Upon an overlappingly laying of two elements 1, the jaw 5 engages the insert member 6. The presence of the jaw 5 and the insert member 6 allows that the elements 1 be shifted somewhat with respect to each other in height direction of the roof, and that the elements in heigth direction of the roof, overlap to a more or lesser extent.

The roofing element 1 of this invention is preferably corrugated, and comprises a first transversal rim 9 in which one or more recesses 6 are provided, which serve as insert members.

The roofing element 1 of this invention preferably also comprises an upper rim 10 and a groove 11. The upper rim 10 may be applied over a tile lath in order to allow an improved attachment of the roof tile to the framework.

According to this invention, the term roofing element relates to both the element which corresponds to a roof tile, and is intended for the construction of a roofing, and the related accessories, such as for example the upper tile, the ridge tile, the sidings, etc.

For manufacturing the roofing element 1 of this invention, mostly a steel sheet rolled into a bobbin is used, and polymer film rolled onto a roll. The roll of polymer film is unrolled simultaneously with a first and a second bobbin of steel sheet, in such a way that the film is inserted between the two steel sheets. Subsequently, the whole of the steel sheets and the film is moved at a pre-determined speed, through a furnace, in which the metal sheets are heated and the polymer film is heated to a temperature at which the film softens, but which is below the melting point of the film. In case an LDPE film is used, the furnace temperature amounts to 200-350°C, preferably 225-275°C. The whole of the heated metal sheets with the intermediate film is subsequently moved between two rotating rolls, where the film and the steel sheets are pressed together and onto each other, and the adhesion of the film to the steel sheets is accomplished. The multilayer sheet thus obtained is cut to size and may be stored, or immediately moulded into the desired shape.

In case one of the metal sheets and/or the polymer film is provided with an adhesive which already bonds at room temperature, it is not necessary to heat the film, and a good adhesion may be obtained by pressing the upper layer 2, the lower layer 4 and the polymer film onto each other.

### Example

An LDPE film with a thickness of 120 µm is applied between two steel sheets, each having a thickness of 0.3 mm and being coated with a zinc-aluminium coat. The LDPE film is heated to 250°C during 4 seconds. The metal sheets with the intermediate film are pressed onto each other, by mowing the whole between two rotating rolls. A multilayer sheet is obtained, in which the metal sheets are attached to each other by means of the film. The multilayer sheet is subsequently moulded into the shape of a roof tile, and provided with a decorative coat.

## Claims

1. A multilayer roofing element (1) made of a sandwich laminate comprising an upper layer (2) and a lower layer (4) made of metal sheet, between which upper and lower layer an intermediate layer (3) of a polymer film is provided, the upper and lower layer being connected to each other, **characterised in that** the polymer film (3) is a polyethylene film with a thickness of between 100-500 µm and the metal sheet (2, 4) has a thickness of between 100 and 500 µm.

2. A multilayer roofing element according to claim 1, **characterised in that** the upper layer (2) and lower layer (4) are attached to each other by means of the polymer film (3).

3. A multilayer roofing element according to claim 1 or 2, **characterised in that** the upper layer (2) and lower layer (4) are attached to the polymer film (3) by means of an adhesive.

4. A multilayer roofing element according to any one of claims 1-3, **characterised in that** the polymer film (3) is a film of low density polyethylene.

5. A multilayer roofing element according to any one of claims 1 to 4, **characterised in that** the polymer film (3) has a thickness in the range of 110-150 µm.

6. A multilayer roofing element according to any one of claims 1 to 5, **characterised in that** the metal sheet (2, 4) is a steel sheet, provided with an aluminium-zinc coating.

7. A multilayer roofing element according to any one of claims 1 to 6, **characterised in that** the metal sheet (2, 4) has a thickness In the range of 150-350 µm.

8. Process for manufacturing a multilayer roofing element (1) according to any one of claims 1 to 7, **characterised in that** the polymer film (3) is inserted between two metal sheets (2, 4), and the whole is heated to a temperature below the melting point of the polymer, whereupon the metal sheets with the intermediate film are pressed onto each other.

9. Process according to claim 8, **characterised in that** the metal sheets (2, 4) with intermediate film (3), which are pressed onto each other, are moulded into the shape of a roof tile.

## Patentansprüche

1. Mehrschichten-Dacheindeckungselement (1), das aus einem Verbundschichtstoff hergestellt ist, welcher eine obere Schicht (2) und eine untere Schicht (4) umfaßt, die aus Blech hergestellt sind, wobei zwischen der oberen und der unteren Schicht eine Zwischenschicht (3) aus einem Polymerfilm bereitgestellt ist, wobei die obere und die untere Schicht miteinander verbunden sind, **dadurch gekennzeichnet, daß** der Polymerfilm (3) ein Polyethylenfilm mit einer Dicke zwischen 100 und 500 µm ist, und das Blech (2, 4) eine Dicke zwischen 100 und 500 µm aufweist.

2. Mehrschichten-Dacheindeckungselement nach Anspruch 1, **dadurch gekennzeichnet, daß** die obere Schicht (2) und die untere Schicht (4) durch den Polymerfilm (3) aneinander angebracht sind.

3. Mehrschichten-Dacheindeckungselement nach Anspruch 1 oder 2, **dadurch gekennzeichnet, daß** die obere Schicht (2) und die untere Schicht (4) durch einen Klebstoff am Polymerfilm (3) angebracht sind.

4. Mehrschichten-Dacheindeckungselement nach einem der Ansprüche 1 bis 3, **dadurch gekennzeichnet, daß** der Polymerfilm (3) ein Film aus Polyethylen niedriger Dichte ist.

5. Mehrschichten-Dacheindeckungselement nach einem der Ansprüche 1 bis 4, **dadurch gekennzeichnet, daß** der Polymerfilm (3) eine Dicke im Bereich von 110 bis 150 µm aufweist.

6. Mehrschichten-Dacheindeckungselement nach einem der Ansprüche 1 bis 5, **dadurch gekennzeichnet, daß** das Blech (2, 4) ein Stahlblech ist, das mit einer Aluminium-Zink-Beschichtung versehen ist.

7. Mehrschichten-Dacheindeckungselement nach einem der Ansprüche 1 bis 6, **dadurch gekennzeichnet, daß** das Blech (2, 4) eine Dicke im Bereich von 150 bis 350 µm aufweist.

8. Verfahren zum Herstellen eines Mehrschichten-Dacheindeckungselements (1) nach einem der Ansprüche 1 bis 7, **dadurch gekennzeichnet, daß** der Polymerfilm (3) zwischen zwei Bleche (2, 4) eingesetzt wird, und das Ganze auf eine Temperatur unter dem Schmelzpunkt des Polymers erhitzt wird, woraufhin die Bleche mit dem Zwischenfilm aufeinander gepreßt werden.

9. Verfahren nach Anspruch 8, **dadurch gekennzeichnet, daß** die Bleche (2, 4) mit dem Zwischenfilm (3), die aufeinander gepreßt sind, in die Form eines Dachziegels geformt werden.

## Revendications

1. Élément de couverture (1) multicouche constitué d'un stratifié sandwich comprenant une couche supérieure (2) et une couche inférieure (4) constituées de feuilles de tôle entre lesquelles couches supérieure et inférieure une couche intermédiaire (3) d'un film polymère est prévue, les couches supérieure et inférieure étant connectées l'une à l'autre, **caractérisé en ce que** le film polymère (3) est un film en polyéthylène ayant une épaisseur entre 100 et 500 µm et la feuille de tôle (2, 4) a une épaisseur entre 100 et 500 µm.

2. Élément de couverture selon la revendication 1 **caractérisé en ce que** la couche supérieure (2) et la couche inférieure (4) sont attachées l'une à l'autre au moyen du film polymère (3).

3. Élément de couverture selon la revendication 1 ou 2 **caractérisé en ce que** la couche supérieure (2) et la couche inférieure (4) sont attachées au film polymère (3) au moyen d'un adhésif.

4. Élément de couverture selon une quelconque des revendications 1 - 3 **caractérisé en ce que** le film polymère (3) est un film en polyéthylène de faible densité.

5. Élément de couverture selon une quelconque des revendications 1 à 4 **caractérisé en ce que** le film polymère (3) a une épaisseur de l'ordre de 110 - 150 µm.

6. Élément de couverture selon une quelconque des revendications 1 à 5 **caractérisé en ce que** la feuille de tôle (2, 4) est une feuille d'acier pourvue d'un revêtement en aluminium-zinc.

7. Élément de couverture selon une quelconque des revendications 1 à 6 **caractérisé en ce que** la feuille de tôle (2, 4) a une épaisseur de l'ordre de 150 - 350 µm.

8. Procédé de fabrication d'un élément de couverture (1) multicouche selon une quelconque des revendications 1 à 7 **caractérisé en ce que** le film polymère (3) est inséré entre deux feuilles de tôle (2, 4), et le tout est chauffé à une température inférieure au point de fusion du polymère, à la suite de quoi les feuilles de tôle avec le film intermédiaire sont pressées l'une sur l'autre.

9. Procédé selon la revendication 8 **caractérisé en ce que** les feuilles de tôle (2, 4) avec le film intermédiaire (3), qui sont pressées l'une sur l'autre, sont moulées en forme de tuile.
